# EUROPEAN PATENT SPECIFICATION

(11) **EP 3 267 623 B1**
(45) Date of publication and mention of the grant of the patent: **02.03.2022**
(21) Application number: 16185631.5
(22) Date of filing: 25.08.2016
(51) Int. Cl.: H04L 12/24, H04L 29/12, H04L 12/28, H04W 36/08, H04W 84/12, H04W 36/38

(54) **SYSTEM AND METHOD FOR TOPOLOGY MANAGEMENT IN LOCAL AREA NETWORK**
SYSTEM UND VERFAHREN ZUR TOPOLOGIEVERWALTUNG IN EINEM KABELNETZWERK
SYSTÈME ET PROCÉDÉ DE GESTION DE TOPOLOGIE DANS UN RÉSEAU LOCAL

(30) Priority: 17.06.2016 TW 105119118
(43) Date of publication of application: 10.01.2018
(73) Proprietor: Arcadyan Technology Corporation, Hsinchu City 30071 (TW)
(72) Inventor: LEE, Chih-Fang, 717 Tainan City (TW); HSIEH, Tsung-Hsien, 30071 Hsinchu City (TW); CHEN, Chun-Ping, 30071 Hsinchu City (TW); LIU, Fa-Chiang, 30071 Hsinchu City (TW)
(74) Representative: Viering, Jentschura & Partner mbB Patent- und Rechtsanwälte

(56) References cited:
- US-A1- 2006 014 536
- Daniel Camps-Mur ET AL: "Device to device communications with WiFi Direct: overview and experimentation", , 11 January 2013 (2013-01-11), XP055101759, Retrieved from the Internet: URL:http://enjambre.it.uc3m.es/~agsaaved/p apers/2012_camps_wircommag.pdf [retrieved on 2014-02-12]
- Paul E Huck: "Zero Configuration Name Services for IP Networks", , 1 June 2001 (2001-06-01), pages 1-78, XP055440626, Retrieved from the Internet: URL:http://web.mit.edu/profit/PDFS/HuckP.p df [retrieved on 2018-01-12]
- John Blackford ET AL: "TR-069 CPE WAN Management Protocol", , 8 January 2014 (2014-01-08), pages 1-228, XP055278927, Retrieved from the Internet: URL:https://www.broadband-forum.org/techni cal/download/TR-069_Amendment-5.pdf [retrieved on 2016-06-08]

## Description

### BACKGROUND OF THE INVENTION

### 1. Field of the Invention

The present invention is generally related to a system and a method of network management; and in particular to a system and a method performed by a master access point in a local area network.

### 2. Description of Related Art

At least one wireless access point (AP) should be disposed in a conventional wireless local area network that allows various devices in the LAN to link a node, a network, or surf over the Internet via the access point. The access point may act as a router or a gateway that is disposed at a critical entry port to an external network.

More access points can be necessary to expand coverage of wireless signals for a wireless LAN. More access points may also support more services or more connection requests for the terminal devices in the LAN. However, the conventional wireless local area network lacks effective schemes to expand the network coverage and management thereof. The network operators are always called to setup the network topology or individual access point when the access points in the topology of LAN are changed. For example, when an access point is newly added, the network operator will be sent to the location of the access point to set up the network communication protocol, load balance, redundancy, and/or configuration of the network, e.g. network address, gateway and network mask. The conventional schemes of network management may support remote maintenance, but they lack a consistent solution for achieving overall management and sometimes the operator needs to operate on-site maintenance for individual equipment.

In a conventional technology, a master access point is defined in a local area network. The master access point is used to collect information of every access point in the same LAN, and therefore acknowledges the real-time situation of the network. However, the network operator may still need to reach the location of the equipment for on-site maintenance when any change, e.g. change of topology, happens in the LAN. "Daniel Camps-Mur et al: "Device to device communications with WiFi Direct: overview and experimentation", 11 January 2013, XP055101759" discloses A method for managing topology of a local area network, comprising: in a local area network including a plurality of access points (101) which exchange packet information with each other; by a management protocol, every access point (101) confirming one of the access points (101) to allocate network addresses for devices in the local area network; and designating the access point (101) which allocates the network addresses as a master access point of the local area network; by the management protocol, every access point (101) acquiring a network address of the master access point from broadcast packets from the master access point; and every access point (101) transmitting operating information to the master access point using the management protocol, and the master access point receiving operating information from every access point (101); wherein the master access point operates as a server allocating network addresses. Another method is disclosed in Paul E Huck: "Zero Configuration Name Services for IP Networks", 1 June 2001, pages 1-78, XP055440626".

### SUMMARY OF THE INVENTION

The invention is defined by the appended claims.

### BRIEF DESCRIPTION OF THE DRAWINGS

Fig. 1 schematically shows a network framework for implementing a method for topology management in a local area network according to one embodiment of the present invention;
Fig. 2 schematically shows another network framework for implementing the method according to another embodiment of the present invention;
Fig. 3 schematically shows another network framework according to one more embodiment of the present invention;
Fig. 4 shows a flow chart depicting the method for topology management in the local area network in one embodiment of the present invention;
Fig. 5 shows a flow chart depicting method for topology management in the local area network in one further embodiment of the present invention;
Fig. 6 shows another flow chart depicting method for topology management in the local area network in another embodiment of the present invention.

### DETAILED DESCRIPTION OF THE PREFERRED EMBODIMENTS

The present invention will now be described more fully with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Disclosure herein is related to a system for topology management in a local area network and a method thereof. It is noted that the network topology constituted by the system for topology management in accordance with the present invention can operate over layer 2 or layer 3 socket interface under a network communication protocol.

In one of the embodiments of the present invention, one of the access points in the local area network can be found to serve allocating network address, e.g. IP address, or network identification based on the exchanged packets there-between. The service for allocating network address is such as a Dynamic Host Configuration Protocol (DHCP) service. The access point may act as a master access point for managing the access points in the LAN.

Under this network framework, a mechanism of automatically designating a master access point is operated in every access point when the topology of the LAN is changed. A management protocol is applied among the access points in the local area network. For example, a new master access point can be re-designated based on the exchanged network packets by the management protocol if the original master access point is replaced or canceled. In which, if any access point is able to allocate network addresses, the access point can be designated as the master access point. Further, the master access point can be selected if one of the access points runs TR-069 service, or the hardware information of every access point can be a basis to determine the master access point.

The TR-069 (Technical Report 069) is a technical specification that was published by Broadband Forum in May, 2004. TR-069 is a communication protocol developed to remotely control user-end device over a management protocol, e.g. CPE WAN Management Protocol (CWMP). In practice, TR-069 renders the communication protocol between user-end device, e.g. CPE, and an Auto Configuration Server (ACS). Through this TR-069 communication protocol, the user device may activate service, function configuration, file uploading and downloading, and system diagnosis. TR-069 allows the access point to initialize system and operation management.

The hardware information is such as media access control address (MAC), system operating uptime, or capability of processor, or a combination thereof. Further, a neighbor list in every access point can be referred to for the determination. The master access point is designated by a specific rule such as the serial number of the hardware, the capability of computation, or the loading.

The system and method in the disclosure can be applicable to the local area network including multiple access points, especially to the wireless local area network (WLAN). The access points act as the roles such as the hot spots, network sharing machines, routers and/or gateways in the local area network. The access points can be the nodes allowing the terminal devices to steer to other domains such as the Internet. When the plurality of access points operate in the local area network, an administrator is required to control the operations of all the access points in the LAN. For example, when performance of one of the access points declines because of a traffic jam, the related management scheme can be incorporated for the other access points to share the burden such as load balance and redundancy. The management scheme also allows the terminal devices to conduct hand-off among the access points in the local area network.

The local area network can be such as a home network, company intranet, or wireless local area networks. In the local area network including a plurality of access points, the access point can acknowledge any change regarding its topology such as disconnection, replacement of access point, or any change of number of the access points joined in the LAN. When there is any change of topology of the LAN, the master access point will be notified under the management protocol. The master access point can make a policy decision such as initiating a redundancy process, adjusting routing path of packets, and/or changing the signaling frequency.

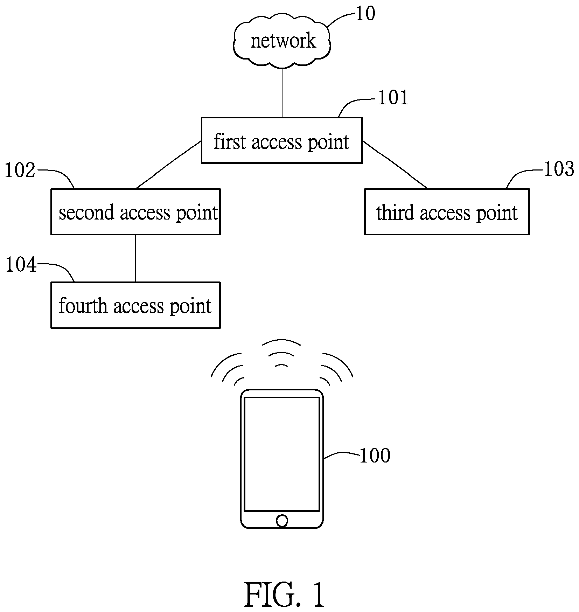

Reference is made to Fig. 1 depicting a network framework applying the method for topology management for a local area network.

A local area network is shown in the diagram. The local area network can be connected to an external network 10 via a first access point 101. A second access point 102, a third access point 103 and a fourth access point 104 are also located in the same LAN. Assembly of the access points serves various terminal devices able to link to an external network 10. For example, a user device 100 can connect with the fourth access point 104 since the fourth access point 104 is closest to the user device 100.

The first access point 101, the second access point 102, the third access point 103, and the fourth access point 104 can be interconnected via wireless or wired connections. Under a specific management protocol, the access points exchange their messages. In particular, the operating information for every access point can be transmitted to the master access point. The access point can report network status to the master access point. If any change of topology is found, the local area network can therefore react to the change using the method for topology management.

The access point can have the function of a gateway, a router, a hot spot, or even the DSLAM (Digital Subscriber Line Access Multiplexer) for providing Internet access service.

Under the framework of the local area network using the topology management, every access point performs the management protocol by software, firmware inside an IC, or circuits. The management protocol allows every access point to exchange its messages with others, e.g. the neighboring access point. Then one of the access points can be confirmed to serve allocating network addresses. This access point is designated to be the master access point which is able to allocate network addresses, and to notify other access points of its network address. Every access point can report the operating information to the master under this management protocol. In one exemplary example, the master access point acts as a DHCP server for the local area network.

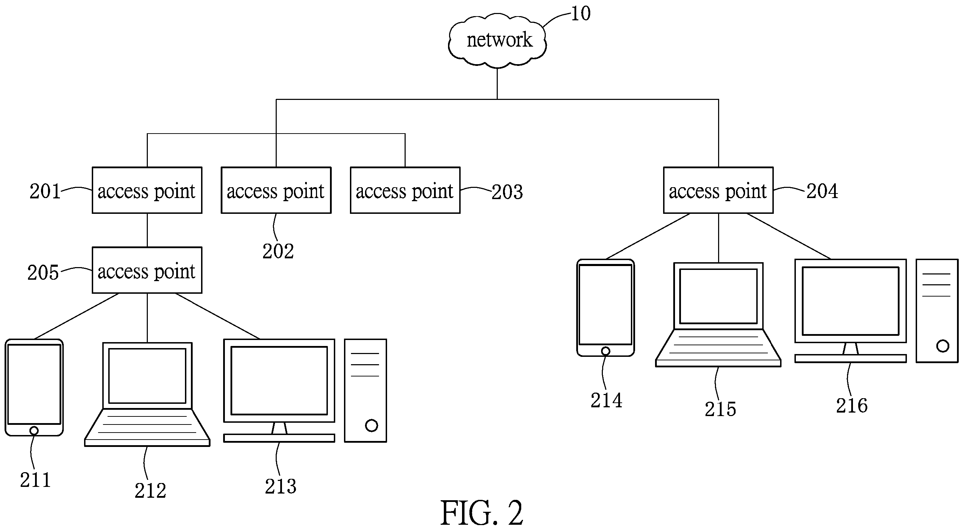

Reference next is made to Fig. 2, depicting the network framework for implementing the method for topology management. The shown local area network is divided into two regions, in which a plurality of access points 201, 202, 203 and 205 form a group, and an access point 204 is alone at the other side. For example, for a place or any need requiring more complete signaling coverage, the access points 201, 202, 203 and 205 can render a wider coverage of network signals, for example allowing the user devices 211, 212 and 213 in the local area network to link to the external network 10. The access point 204 may merely serve the user devices 214, 215 and 216 for network connection.

Similarly, in a local area network with a specific network topology, the management protocol can be used to define a master access point. In addition to rendering DHCP service for the user device, the master access point can manage those access points (201, 202, 203, 204 and 205).

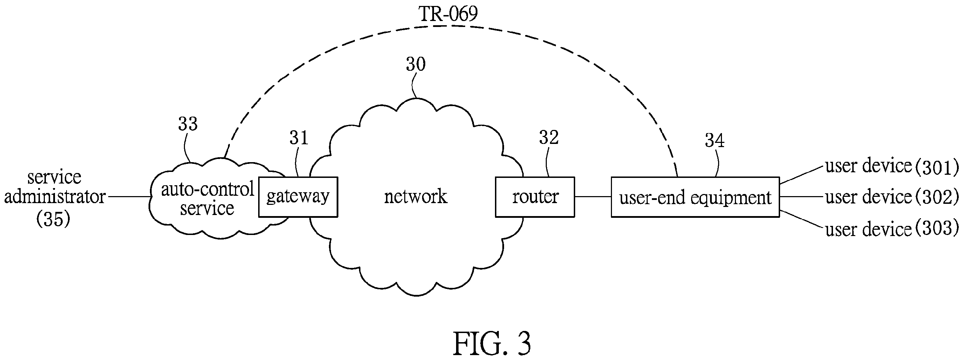

Fig. 3 shows a schematic diagram describing a network framework of a local area network having an access point operating TR-069 service. TR-069 defines a communication protocol between the user-end devices, e.g. CPE, and an ACS. The TR-069 node can act as the master access point that allows the user devices in the local area network to perform initialization and operation management including network service activation, function configuration, file downloading/uploading, and system inspection.

The framework shows two systems at two sides of a network 30. A service administrator 35 providing auto-control service 33 is at one side. An automatic control server is provided, and connected with network 30 via a gateway 31. The service administrator 35 assists the user-end equipment 34 including user devices 301, 302 and 303 to complete configuration automatically through the auto-control service 33. The user-end equipment 34 is generally connected to network 30 via a router 32. In the exemplary example, the user-end equipment 34 can establish connection, e.g. the dotted line, with the ACS at the auto-control service 33 under the TR-069 communication protocol.

For example, under the framework of topology management in accordance with the present invention, the access point operating the TR-069 service can establish connection between every user device (301, 302, and 303) and the ACS for the auto-control service (33). The user devices 301, 302 and 303 in the LAN can complete service activation such as function configuration, file transmission, and system inspection under the TR-069 communication protocol.

In accordance with the present invention, the access point operating the TR-069 service satisfies one of the conditions to act as the master access point in the local area network.

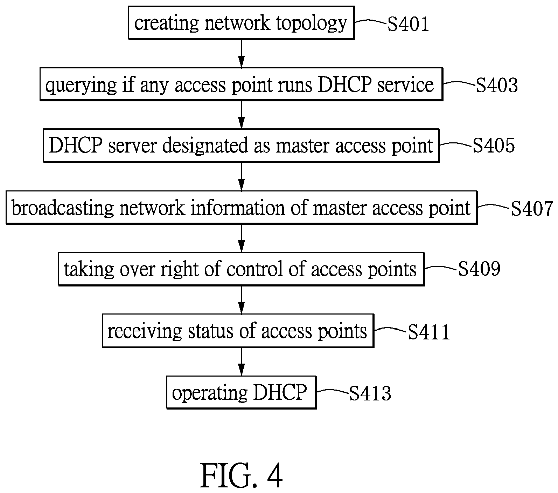

Fig. 4 shows a flow chart describing the method for topology management in a local area network according to one embodiment of the present invention. To operate the scheme of topology management in accordance with the present invention, every access point in the local area network should support a specific management protocol that can be implemented in the access point by software, firmware or circuits. Through this management protocol, the access points in the same LAN can communicate with each other. For example, the access points exchange their packets for confirming one of the access points is capable of allocating a network address. The access point able to allocate network addresses to other access points in the LAN can be designated as the master access point. The access points can be notified and record the network address of the master access point, and also report their operating information to the master access point.

The method for topology management in accordance with the present invention is embodied in a local area network. In the method, in the beginning step S401, a network topology is established in the local area network in which a plurality of access points is disposed. The access points exchange their packet information, and then acknowledge the status of the local area network. In the local area network, such as in step S403, it is determined whether or not one of the access points runs DHCP service through the exchanged broadcast packets. Every access point can query/probe the neighboring access points through the exchanged packets including the request packets that ask for allocation of network ID such as network address. The kinds of packets may indicate the DHCP request, or BOOTP request.

In step S405, one of the access points providing the service of allocating network addresses can be confirmed through the message of responding to the DHCP request. The access point issues the request for network address allocation through broadcast packets. The access point replying to the request of network address allocation can be regarded as the access point providing the service. The access point can therefore act as the master access point. The master access point starts broadcasting the messages including notification of network address of the master access point to the access points, such as in step S407. The management protocol run in the access point allows every access point to acknowledge the network address of the master access point. The access point also transmits its operating information to the master access point under the management protocol.

When a master access point is confirmed, in step S409, the master access point takes over right of control of the access points in the LAN through the management protocol. In step S411, the master access point collects the operating information of the other access points. In step S413, the master access point continuously serves allocating the network address, such as DHCP service.

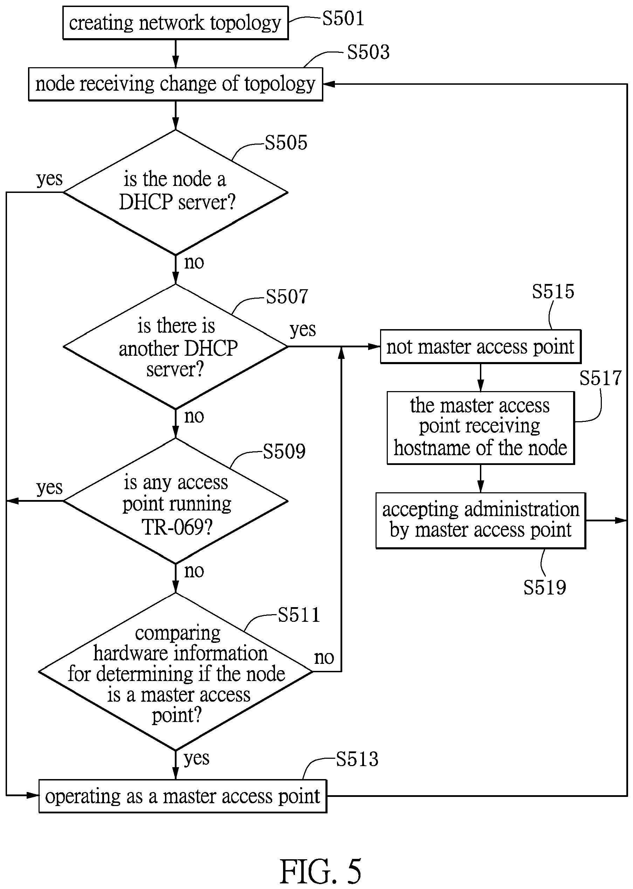

Fig. 5 shows a flow chart describing the method for topology management in the local area network in one embodiment of the present invention. To solve the problem caused by the change of topology of the LAN, the method for topology management allows the access points to re-designate the master access point through the management protocol. The re-designated master access point may again acquire operating information from every access point by the management protocol. In the method, the system designates the access point which is capable of allocating the network addresses to the access points to be the master access point. For example, the DHCP server can be designated to be the master access point. If no access point runs the DHCP service, the access point operating the TR-069 service can also be the master access point. Otherwise, the hardware comparison among the access points can be one factor to designate the master access point when there is no access point running the TR-069 service.

In beginning step S501, a topology of a local area network is created. A plurality of nodes including the access points are included in the LAN. A master access point can be decided through the exchanged packet information among the access points. In general, any access point running DHCP service can be designated to be the master access point. The master access point continuously collects the operating information from other access points. The collected information allows the master access point to determine any change of the topology.

In step S503, in an initial state, the system can acknowledge any change of topology of the LAN through the broadcast packets. Every node in the LAN can receive the message regarding the change of the topology. The change of topology formed upon a network node is such as adding or canceling the node, disconnection, or damaged. The change may also indicate the initial phase of creating the topology of LAN. In the meantime, the access point can receive the message of change of the topology by the management protocol. Next, such as in step S505, it is determined whether the node acts as a DHCP server. If the node is a DHCP server, the node can be designated to be the master access point in the LAN, such as in step S513. On the contrary, such as in step S507, the system determines whether there is another DHCP server or any node running the DHCP server if the added or the cancelled node is not the DHCP server.

It is worth noting that when a new access point is added to the local area network, it is determined whether this access point is capable of allocating the network addresses. If the access point is also operating the service of allocating the network addresses, such as DHCP service, the service may be de-activated when one access point is already running the service of DHCP in the LAN.

In step S507, if there is still a DHCP server in the LAN, the node (added) causing the change of the topology cannot act as the master access point, such as in step S515. The original DHCP server therefore acts as the master access point. The master access point goes on acquiring the host name of the node, other access points and/or the user devices, as in step S517. The other access points will accept administration by the master access point, as in step S519.

Back to step S507, when no DHCP server exists in the LAN, in step S509, the system determines if any access point runs the TR-069 service. In the determination, the access point operating the TR-069 service can be designated to be the master access point, such as in step S513. On the contrary, if there is no access point running the DHCP service or TR-069 service, in step S511, the master access point can be determined by a hardware comparison.

In the step of hardware comparison for determining the master access point, the media access control address (MAC) for every access point can be one of the factors for the determination. Further, the system operating time and/or the neighbor list can be factors for the determination of the master access point. Some other hardware information such as the capability of the processor and network transmission can also be used to determine the master access point. The master access point can therefore be designated by hardware comparison. In step S513, the hardware comparison can result in designating the master access point. The process then goes to step S503, and repeats the related process. If the node causing the change of topology is not the master access point by the hardware comparison, such as in step S515, another access point can be designated as the master access point that continuously acquires the operating information from every access point, such as in steps S517 and S519.

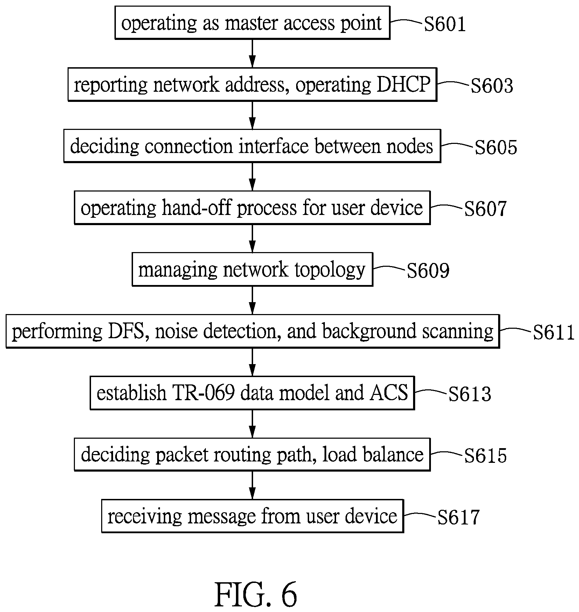

According to the process described in Fig. 6, first in step S601, one access point in the LAN acts as the master access point. Next, in step S603, the master access point reports its network address to the access points in the LAN, and goes on performing DHCP. The master access point, such as in step S605, selects the transmission path for packets in the LAN, controls the load balance performed by the access points, and makes decisions for the connection interface between two access points. In step S607, a hand-off process is performed for the user device to establish connection among the access points in the LAN.

In the process of hand-off, since the master access point continuously receives operating information from every access point, it has the connection information among the access points, or between the access points and the terminal device. The master access point can then acquire a list of connected devices for every access point, and even the received signal strength between the access point and its connected terminal device. The master access point is able to determine the network status for every access point. Since the signal strength over the connection between the access point and the terminal device may decline when the terminal device moves in the LAN, the master access point can determine a next access point to take over the connection before the connection there-between fails. In this process, the master access point asks the access point that establishes the original connection to disconnect the connection, and reject the request made by the terminal device. In the meantime, the master access point may also ask the next access point to take over the connection to the terminal device so as to complete the hand-off process.

The master access point can also manage the network topology. The master access point can determine if any change to the topology of the LAN is occurred, in step S609. In one further embodiment of the method, under the management protocol performed by the system, a dynamic frequency selection (DFS) process can be performed. By DFS, the master access point can instruct an idle antenna of an access point in the LAN to process noise detection and background scanning within a specific frequency band, in step S611.

The master access point may be the mentioned TR-069 node for creating TR-069 data model for a terminal device so as to provide for the device to be configured automatically. In step S615, the master access point can also decide packet paths between nodes, and perform load balance. The master access point can receive messages from the user device, such as in step S617.

More, according to the system for topology management in a LAN in one embodiment of the present invention, the management protocol can be implemented by software means. The system includes a memory used to store the program for performing the method for topology management in a LAN. The program includes instructions executed by the access point. The instructions are such as the instruction for exchanging packet information with neighboring access points, the instruction for confirming the access point that provides the service of allocating network addresses in the LAN, the instruction for recording the network addresses of the master access point, and the instruction for transmitting operating information to the master access point by the management protocol.

Thus, the master access point designated through the method for topology management can be used to decide the connection interface between access points, and the wireless channel, and acquire messages from every access point so as to obtain the operating status of the whole network. The operating information obtained from the access point is such as the power status, idle condition, the connection status with a neighboring device, and the operating logs.

It is intended that the specification and depicted embodiment be considered exemplary only, with a true scope of the invention being determined by the broad meaning of the following claims.

## Claims

1. A method for managing topology of a local area network said local area network comprising: a plurality of access points (101) which exchange packet information with each other said method comprising the steps of:
by each of said access points (101) by using a management protocol:
querying/probing the access points neighboring each of said access points through a packet said packet indicating a Layer 2 1905.1 protocol;
confirming one of said each of said access points (101) to be capable of allocating network addresses for devices in the local area network according to a message of responding to a DHCP request; and
designating the access point (101) which is capable of allocating the network addresses as a master access point of the local area network according to the message of responding to the DHCP request;
by the designated master access point:
broadcasting messages including notification of network address of the master access point to each of all other access points;
by each of all the other access points:
acquiring the network address of the designated master access point from the broadcasted messages from the master access point using the management protocol; and
transmitting operating information to the designated master access point using the management protocol, and
by the designated master access point:
receiving operating information from each of all the other access points (101); wherein the designated master access point operates as a server allocating network addresses through a DHCP service.

2. The method according to claim 1, wherein every access point (101) in the local area network issues a request for a network address through broadcast packets; and the access point (101) which responds to the request for the network address is the master access point which allocates the network addresses.

3. The method according claim 1, wherein, when a topology of the local area network is changed, in which every access point (101) receives a message regarding the change of the topology, every access point (101) re-confirms which one of the access points (101) allocates the network addresses according to the message of responding to the DHCP request, so as to re-designate the master access point, and the master access point again collects operating information from every access point (101) by the management protocol.

4. The method according to claim 3, wherein the change of the topology is to add an access point, a function of allocation of network address is de-activated if the added access point has the function of allocating network addresses.

5. The method according to claim 3, wherein the change of topology is to lose the access point (101) with the function of allocation of network addresses, and another master access point is re-designated by the following steps:
determining whether or not there is another access point (101) capable of allocating network addresses in the local area network according to the message of responding to the DHCP request; the access point (101) is designated as the master access point according to the message of responding to the DHCP request if one access point (101) allocating network addresses is confirmed;
if there is no other access point (101) allocating network addresses, then determining whether or not there is any access point (101) operating TR-069 service in the local area network through exchanging packet information;
the access point (101) is designated as the master access point if the access point (101) operating TR-069 service is confirmed; or the master access point is designated by comparing hardware information of the access points (101) if there is no access point allocating network addresses or operating TR-069 service.

6. The method according to claim 5, wherein the hardware information used to determine the master access point includes media access control address, system operating uptime, or capability of processor, or a combination thereof; and/or a neighbor list in every access point is referred to for the determination.

7. The method according one of claims 1 to 6, wherein the master access point at least acquires a list of terminal devices connected to every access point (101), received signal strength between every access point (101) and every connected terminal device, and network status for every access point (101).

8. The method according to claim 1, further comprising:
every access point (101) continuously collecting operating information from other access point (101); and determining if there is any change to a topology of a local area network at any time, in which every access point (101) receives a message regarding the change of the topology;
determining whether or not any access point (101) operates DHCP service according to the message of responding to the DHCP request if any access point (101) receives a message relating to change of the topology;
designating a first access point (101) as the master access point in the local area network if the first access point (101) operates DHCP service;
determining whether or not any other access point operates DHCP service in the local area network according to the message of responding to the DHCP request if the first access point (101) does not operate DHCP service;
designating a second access point (101) operating DHCP service as the master access point according to the message of responding to the DHCP request if the second access point (101) operates DHCP service;
next determining whether or not any other access point (101) operates TR-069 service through exchanging packet information by every access point (101) if the second access point (101) does not operate DHCP service;
designating a third access point (101) operating TR-069 service as the master access point through exchanging packet information by every access point (101) if the third access point (101) is found to operate TR-069 service; and
designating a fourth access points (101) as the master access point by comparing their hardware information through exchanging packet information by every access point (101) if there is no access point (101) operating TR-069 service.

9. The method according to claim 8, further comprising: using the management protocol by the master access point to manage the access points (101), including receiving messages relating to change of topology from the packets.

10. The method according to claim 9, wherein the change of topology includes adding or cancelling nodes, disconnection in the local area network.

11. The method according to claim 10, wherein, when the change of topology is to add a new access point (101) to the local area network, the DHCP service run in the added access point is de-activated when the added access point also runs DHCP service.

12. The method according claim 9, wherein the hardware information in comparison for determining the master access point includes media access control address, system operating uptime, or capability of processor, or a combination thereof; and/or a neighbor list in every access point is referred to for the determination.

13. A system for topology management, operating a management protocol in a local area network for performing a method for topology management, comprising:
means for exchanging packet information with neighboring access point (101) by each of said access points (101);
by each of said access points (101) by using a management protocol:
means for querying/probing the access points neighboring each of said access points through a packet said packet indicating a Layer 2 1905.1 protocol;
means for confirming one of said each of said access points (101) to be capable of allocating network addresses in the local area network according to a message of responding to a DHCP request by the management protocol by each of said access points (101);
means for designating the access point (101) for allocating network addresses as a master access point in the local area network by each of said access points (101);
by the designated master access point:
means for broadcasting messages including notification of network address of the master access point to each of all other access points;
by each of all the other access points:
means for recording the network address of the designated master access point in the local area network by each of said access points (101); and
means for transmitting operating information to the designated master access point by each of said access points (101).

14. The system according to claim 13, wherein the system is implemented in each of said access points (101) in the form of software, firmware or circuits.

15. The system according to claim 13, wherein the designated master access point operates as a server for allocating network address in the local area network.

## Patentansprüche

1. Verfahren zum Topologie-Verwalten eines lokalen Netzwerkes, wobei das besagte lokale Netzwerk eine Vielzahl von Zugangspunkten (101) aufweist, welche Paketinformationen miteinander austauschen, wobei das besagte Verfahren die folgenden Schritte aufweist:
mittels jedes von den besagten Zugangspunkten (101) unter Verwendung eines Verwaltungsprotokolls:
Abfragen/Abtasten der Zugangspunkte, welche zu jedem von den besagten Zugangspunkten benachbart sind, durch ein Paket, wobei das besagte Paket auf ein Schicht-2-1905.1-Protokoll hinweist,
Bestätigen, dass einer von den besagten Zugangspunkten (101) in der Lage ist, Netzwerkadressen für Vorrichtungen in dem lokalen Netzwerk zuzuweisen, gemäß einer Antwortnachricht auf eine DHCP-Anforderung, und
Ernennen des Zugangspunkts (101), welcher in der Lage ist, die Netzwerkadressen zuzuweisen, als einen Master-Zugangspunkt des lokalen Netzwerks gemäß der Antwortnachricht auf die DHCP-Anforderung, mittels des ernannten Master-Zugangspunkts:
Rundsenden von Nachrichten, welche eine Netzwerkadressenmitteilung des Master-Zugangspunkts aufweisen, an jeden von allen anderen Zugangspunkten,
mittels jedes von allen anderen Zugangspunkten:
Akquirieren der Netzwerkadresse des ernannten Master-Zugangspunkts aus der Nachricht, welche von dem Master-Zugangspunkt rundgesendet wird, unter Verwendung des Verwaltungsprotokolls, und
Übermitteln von Betriebsinformationen an den ernannten Master-Zugangspunkt unter Verwendung des Verwaltungsprotokolls, und
mittels des ernannten Master-Zugangspunkts:
Empfangen von Betriebsinformationen von jedem von all den anderen Zugangspunkten (101), wobei der ernannte Master-Zugangspunkt als ein Server fungiert, welcher Netzwerkadressen durch einen DHCP-Dienst zuweist.

2. Verfahren gemäß Anspruch 1, wobei jeder Zugangspunkt (101) in dem lokalen Netzwerk eine Anfrage nach einer Netzwerkadresse durch Breitbandpakete ausgibt, und der Zugangspunkt (101), welcher auf die Anfrage nach der Netzwerkadresse antwortet, der Master-Zugangspunkt ist, welcher die Netzwerkadressen zuweist.

3. Verfahren gemäß Anspruch 1, wobei, wenn eine Topologie des lokalen Netzwerks geändert wird, indem jeder Zugangspunkt (101) eine Nachricht bezüglich der Topologieänderung empfängt, jeder Zugangspunkt (101) rückbestätigt, welcher von den Zugangspunkten (101) die Netzwerkadressen gemäß der Antwortnachricht auf die DHCP-Anfrage zuweist, um den Master-Zugangspunkt erneut festzulegen, und wobei der Master-Zugangspunkt erneut Betriebsinformationen von jedem Zugangspunkt (101) mittels des Verwaltungsprotokolls sammelt.

4. Verfahren gemäß Anspruch 3, wobei die Topologieänderung darin besteht, einen Zugangspunkt hinzuzufügen, wobei eine Netzwerkadressen-Zuweisung-Funktion deaktiviert wird, wenn der hinzugefügte Zugangspunkt die Netzwerkadressen-Zuweisung-Funktion hat.

5. Verfahren gemäß Anspruch 3, wobei die Topologieänderung darin besteht, den Zugangspunkt (101) mit Netzwerkadressen-Zuweisung-Funktion zu verlieren, und wobei ein anderer Master-Zugangspunkt mittels der folgenden Schritte neu ernannt wird:
Ermitteln, ob es oder ob es nicht einen anderen Zugangspunkt (101) gibt, welcher in der Lage ist, Netzwerkadressen in dem lokalen Netzwerk zuzuweisen, gemäß der Antwortnachricht auf die DHCP-Anfrage, wobei der Zugangspunkt (101) als der Master-Zugangspunkt gemäß der Antwortnachricht auf die DHCP-Anfrage ernannt wird, wenn ein Zugangspunkt (101), welcher Netzwerkadressen zuweist, bestätigt wird,
wenn es keinen anderen Zugangspunkt (101) gibt, welcher Netzwerkadressen zuweist, dann Ermitteln, ob es oder ob es nicht einen Zugangspunkt (101) gibt, welcher einen TR-069-Dienst in dem lokalen Netzwerk betreibt, durch das Austauschen von Paketinformationen,
wobei der Zugangspunkt (101) als der Master-Zugangspunkt ernannt wird, wenn der Zugangspunkt (101), welcher den TR-069-Dienst betreibt, bestätigt wird, oder wobei der Master-Zugangspunkt mittels Vergleichens von Hardware-Informationen der Zugangspunkte (101) ernannt wird, wenn es keinen Zugangspunkt gibt, welcher Netzwerkadressen zuweist oder den TR-069-Dienst betreibt.

6. Verfahren gemäß Anspruch 5, wobei die Hardware-Informationen, welche verwendet werden, um den Master-Zugangspunkt zu ermitteln, eine Medienzugriffssteueradresse, eine Systembetriebszeit oder eine Prozessorfähigkeit oder eine Kombination davon aufweisen, und/oder wobei eine Nachbarliste in jedem Zugangspunkt für die Ermittlung herangezogen wird.

7. Verfahren gemäß einem der Ansprüche 1 bis 6, wobei der Master-Zugangspunkt zumindest eine Liste akquiriert von: Endgeräten, welche mit jedem Zugangspunkt (101) verbunden sind, einer empfangenen Signalstärke zwischen jedem Zugangspunkt (101) und jedem verbundenen Endgerät, sowie einem Netzwerkstatus für jeden Zugangspunkt (101).

8. Verfahren gemäß Anspruch 1, ferner aufweisend:
dass jeder Zugangspunkt (101) kontinuierlich Betriebsinformationen von dem anderen Zugangspunkt (101) sammelt, und Ermitteln, ob zu irgendeinem Zeitpunkt eine Topologieänderung eines lokalen Netzwerkes auftritt, bei welcher jeder Zugangspunkt (101) eine Nachricht empfängt, welche die Topologieänderung betrifft,
Ermitteln, ob oder ob nicht irgendein Zugangspunkt (101) einen DHCP-Dienst betreibt, gemäß der Antwortnachricht auf die DHCP-Anforderung, wenn irgendein Zugangspunkt (101) eine Nachricht empfängt, welche sich darauf bezieht, die Topologie zu ändern,
Ernennen eines ersten Zugangspunkts (101) als den Master-Zugangspunkt in dem lokalen Netzwerk, wenn der erste Zugangspunkt (101) einen DHCP-Dienst betreibt,
Ermitteln, ob oder ob nicht irgendein anderer Zugangspunkt einen DHCP-Dienst in dem lokalen Netzwerk betreibt gemäß der Antwortnachricht auf die DHCP-Anforderung, wenn der erste Zugangspunkt (101) den DHCP-Dienst nicht betreibt,
Ernennen eines zweiten Zugangspunkts (101), welcher den DHCP-Dienst betreibt, als den Master-Zugangspunkt gemäß der Antwortnachricht auf die DHCP-Anforderung, wenn der zweite Zugangspunkt (101) den DHCP-Dienst betreibt,
anschließendes Ermitteln, ob oder ob nicht irgendein anderer Zugangspunkt (101) den TR-069-Dienst betreibt, durch Austauschen von Paketinformationen mittels jedes Zugangspunkts (101), wenn der zweite Zugangspunkt (101) den DHCP-Dienst nicht betreibt,
Ernennen eines dritten Zugangspunkts (101), welcher den TR-069-Dienst betreibt, als den Master-Zugangspunkt durch das Austauschen von Paketinformationen mittels jedes Zugangspunkts (101), wenn herausgefunden wird, dass der dritte Zugangspunkt (101) den TR-069-Dienst betreibt, und
Ernennen eines vierten Zugangspunkts (101) als den Master-Zugangspunkt mittels Vergleichens ihrer Hardware-Informationen durch Austauschen von Paket-Informationen mittels jedes Zugangspunkts (101), wenn es keinen Zugangspunkt (101) gibt, welcher den TR-069-Dienst betreibt.

9. Verfahren gemäß Anspruch 8, ferner aufweisend:
Verwenden des Verwaltungsprotokolls mittels des Master-Zugangspunkts, um die Zugangspunkte (101) zu verwalten, einschließlich des Empfangens von Nachrichten, welche die Topologieänderung von den Paketen betreffen.

10. Verfahren gemäß Anspruch 9, wobei die Topologieäderung das Hinzufügen oder Löschen von Knoten und die Verbindungsunterbrechung in dem lokalen Netzwerk aufweist.

11. Verfahren gemäß Anspruch 10, wobei, wenn die Topologieänderung darin besteht, einen neuen Zugangspunkt (101) zu dem lokalen Netzwerk hinzuzufügen, der DHCP-Dienst, welcher in dem hinzugefügten Zugangspunkt ausgeführt wird, deaktiviert wird, wenn der hinzugefügte Zugangspunkt ebenfalls den DHCP-Dienst ausführt.

12. Verfahren gemäß Anspruch 9, wobei die Hardware-Informationen im Vergleich zum Ermitteln des Master-Zugangspunkts eine Medienzugriffssteueradresse, eine Systembetriebszeit oder eine Prozessorfähigkeit oder eine Kombination davon aufweisen, und/oder wobei eine Nachbarliste in jedem Zugangspunkt für die Ermittlung herangezogen wird.

13. System zur Topologieverwaltung, welches ein Verwaltungsprotokoll in einem lokalen Netzwerk zum Durchführen eines Verfahrens zur Topologieverwaltung betreibt, aufweisend:
Mittel zum Austauschen von Paketinformationen mit benachbarten Zugangspunkten (101) mittels jedes von den besagten Zugangspunkten (101),
mittels jedes von den besagten Zugangspunkten (101) unter Verwendung eines Verwaltungsprotokolls:
Mittel zum Abfragen/Abtasten der Zugangspunkte, welche zu jedem von den Zugangspunkten benachbart sind, durch ein Paket, wobei das besagte Paket auf ein Schicht-2-1905.1-Protokoll hinweist,
Mittel zum Bestätigen, dass einer von jedem von den besagten Zugangspunkten (101) in der Lage ist, Netzwerkadressen in dem lokalen Netzwerk zuzuweisen, gemäß einer Antwortnachricht auf eine DHCP-Anforderung mittels des Verwaltungsprotokolls mittels jedes von den Zugangspunkten (101),
Mittel zum Ernennen des Zugangspunkts (101) zum Zuweisen von Netzwerkadressen als einen Master-Zugangspunkt in dem lokalen Netzwerk mittels jedes von den besagten Zugangspunkten (101),
mittels des ernannten Master-Zugangspunkts:
Mittel zum Rundsenden von Nachrichten, welche eine Netzwerkadressenmitteilung des Master-Zugangspunkts an jeden von allen anderen Zugangspunkten aufweist,
mittels jedes von allen anderen Zugangspunkten:
Mittel zum Aufzeichnen der Netzwerkadresse des ernannten Master-Zugangspunkts in dem lokalen Netzwerk mittels jedes von den besagten Zugangspunkten (101), und
Mittel zum Übermitteln von Betriebsinformationen an den ernannten Master-Zugangspunkt mittels jedes von den besagten Zugangspunkten (101).

14. System gemäß Anspruch 13, wobei das System in jedem von den besagten Zugangspunkten (101) in der Form von Software, Firmware oder Schaltungen implementiert ist.

15. System gemäß Anspruch 13, wobei der ernannte Master-Zugangspunkt als ein Server zum Zuweisen von Netzwerkadressen in dem lokalen Netzwerk fungiert.

## Revendications

1. Procédé de gestion de la topologie d'un réseau local, ledit réseau local comprenant : une pluralité de points d'accès (101) qui échangent des informations par paquets les uns avec les autres, ledit procédé comprenant les étapes consistant à :
par chacun desdits points d'accès (101) en utilisant un protocole de gestion :
interroger/sonder les points d'accès voisins de chacun desdits points d'accès par le biais d'un paquet, ledit paquet indiquant un protocole de couche 2 1905.1 ;
confirmer que l'un desdits points d'accès (101) est capable d'attribuer des adresses de réseau pour des dispositifs dans le réseau local selon un message de réponse à une requête DHCP ; et
désigner le point d'accès (101) qui est capable d'attribuer les adresses de réseau comme point d'accès principal du réseau local selon le message de réponse à la demande DHCP ;
par le point d'accès principal désigné :
diffuser des messages comprenant la notification de l'adresse de réseau du point d'accès principal à chacun de tous les autres points d'accès ;
par chacun des autres points d'accès :
acquérir l'adresse de réseau du point d'accès principal désigné à partir des messages diffusés par le point d'accès principal en utilisant le protocole de gestion ; et
transmettre des informations de fonctionnement au point d'accès principal désigné en utilisant le protocole de gestion, et
par le point d'accès principal désigné :
recevoir des informations de fonctionnement de chacun de tous les autres points d'accès (101) ; dans lequel le point d'accès principal désigné fonctionne comme un serveur attribuant des adresses de réseau par le biais d'un service DHCP.

2. Procédé selon la revendication 1, dans lequel chaque point d'accès (101) dans le réseau local émet une demande d'adresse de réseau par l'intermédiaire de paquets de diffusion ; et le point d'accès (101) qui répond à la demande d'adresse de réseau est le point d'accès principal qui attribue les adresses de réseau.

3. Procédé selon la revendication 1, dans lequel, lorsqu'une topologie du réseau local est modifiée, dans lequel chaque point d'accès (101) reçoit un message concernant la modification de la topologie, chaque point d'accès (101) reconfirme lequel des points d'accès (101) attribue les adresses de réseau selon le message de réponse à la requête DHCP, de manière à redésigner le point d'accès principal, et le point d'accès principal collecte à nouveau des informations de fonctionnement à partir de chaque point d'accès (101) par le protocole de gestion.

4. Procédé selon la revendication 3, dans lequel la modification de la topologie consiste à ajouter un point d'accès, une fonction d'attribution d'adresse réseau étant désactivée si le point d'accès ajouté a la fonction d'attribution d'adresses de réseau.

5. Procédé selon la revendication 3, dans lequel le changement de topologie consiste à perdre le point d'accès (101) avec la fonction d'attribution d'adresses de réseau, et un autre point d'accès principal est redésigné par les étapes suivantes :
déterminer s'il existe ou non un autre point d'accès (101) capable d'attribuer des adresses réseau dans le réseau local selon le message de réponse à la demande DHCP; le point d'accès (101) est désigné comme point d'accès principal selon le message de réponse à la demande DHCP si un point d'accès (101) attribuant des adresses de réseau est confirmé ;
s'il n'y a pas d'autre point d'accès (101) attribuant des adresses de réseau, alors déterminer s'il y a ou non un point d'accès (101) exploitant le service TR-069 dans le réseau local par l'échange d'informations par paquets ;
le point d'accès (101) est désigné comme point d'accès principal si le point d'accès (101) exploitant le service TR-069 est confirmé ; ou le point d'accès principal est désigné en comparant les informations matérielles des points d'accès (101) s'il n'y a pas de point d'accès attribuant des adresses réseau ou exploitant le service TR-069.

6. Procédé selon la revendication 5, dans lequel les informations matérielles utilisées pour déterminer le point d'accès principal comprennent l'adresse de contrôle d'accès au support, le temps de fonctionnement du système, ou la capacité du processeur, ou une combinaison de ceux-ci ; et/ou une liste de voisins dans chaque point d'accès est utilisée pour la détermination.

7. Procédé selon l'une des revendications 1 à 6, dans lequel le point d'accès principal acquiert au moins une liste de dispositifs terminaux connectés à chaque point d'accès (101), l'intensité du signal reçu entre chaque point d'accès (101) et chaque dispositif terminal connecté, et l'état du réseau pour chaque point d'accès (101).

8. Procédé selon la revendication 1, consistant en outre à :
permettre à chaque point d'accès (101) de collecter en continu des informations de fonctionnement provenant d'autres points d'accès (101) ; et de déterminer s'il y a un quelconque changement dans une topologie d'un réseau local à tout moment, dans lequel chaque point d'accès (101) reçoit un message concernant le changement de la topologie ;
déterminer si un point d'accès quelconque (101) fait fonctionner ou non le service DHCP selon le message de réponse à la demande DHCP si un point d'accès quelconque (101) reçoit un message relatif à un changement de la topologie ;
désigner un premier point d'accès (101) comme point d'accès principal dans le réseau local si le premier point d'accès (101) exploite le service DHCP ;
déterminer si oui ou non un autre point d'accès exploite le service DHCP dans le réseau local selon le message de réponse à la demande DHCP si le premier point d'accès (101) n'exploite pas le service DHCP ;
désigner un deuxième point d'accès (101) fonctionnant avec un service DHCP comme point d'accès principal selon le message de réponse à la requête DHCP si le deuxième point d'accès (101) fonctionne avec un service DHCP ;
déterminer ensuite si un autre point d'accès (101) exploite ou non le service TR-069 en échangeant des informations de paquets par chaque point d'accès (101) si le deuxième point d'accès (101) n'exploite pas le service DHCP ;
désigner un troisième point d'accès (101) exploitant le service TR-069 comme point d'accès principal par l'échange d'informations de paquets par chaque point d'accès (101) si le troisième point d'accès (101) s'avère exploiter le service TR-069 ; et
désigner un quatrième point d'accès (101) comme point d'accès principal en comparant leurs informations matérielles par l'échange d'informations de paquets par chaque point d'accès (101) s'il n'y a pas de point d'accès (101) exploitant le service TR-069.

9. Procédé selon la revendication 8, comprenant en outre : l'utilisation du protocole de gestion par le point d'accès principal, afin de gérer les points d'accès (101), y compris la réception de messages relatifs au changement de topologie à partir des paquets.

10. Procédé selon la revendication 9, dans lequel le changement de topologie comprend l'ajout ou la suppression de noeuds, la déconnexion dans le réseau local.

11. Procédé selon la revendication 10, dans lequel, lorsque le changement de topologie consiste à ajouter un nouveau point d'accès (101) au réseau local, le service DHCP exécuté dans le point d'accès ajouté est désactivé lorsque le point d'accès ajouté exécute également le service DHCP.

12. Procédé selon la revendication 9, dans lequel les informations matérielles comparées pour déterminer le point d'accès principal comprennent l'adresse de contrôle d'accès au support, le temps de fonctionnement du système, ou la capacité du processeur, ou une combinaison de ceux-ci ; et/ou une liste voisine dans chaque point d'accès est utilisée pour la détermination.

13. Système de gestion de la topologie, exploitant un protocole de gestion dans un réseau local pour exécuter un procédé de gestion de la topologie, comprenant :
des moyens pour échanger des informations de paquets avec un point d'accès voisin (101) par chacun desdits points d'accès (101) ;
par chacun desdits points d'accès (101) en utilisant un protocole de gestion :
des moyens pour interroger/sonder les points d'accès voisins de chacun desdits points d'accès par l'intermédiaire d'un paquet, ledit paquet indiquant un protocole de la couche 2 1905.1 ;
des moyens pour confirmer qu'un desdits points d'accès (101) est capable d'attribuer des adresses de réseau dans le réseau local selon un message de réponse à une demande DHCP par le protocole de gestion par chacun desdits points d'accès (101) ;
des moyens pour désigner le point d'accès (101) pour l'attribution d'adresses de réseau comme point d'accès principal dans le réseau local par chacun desdits points d'accès (101) ;
par le point d'accès principal désigné :
des moyens pour diffuser des messages comprenant la notification de l'adresse réseau du point d'accès maître à chacun de tous les autres points d'accès ;
par chacun des autres points d'accès :
des moyens pour enregistrer l'adresse de réseau du point d'accès principal désigné dans le réseau local par chacun desdits points d'accès (101) ; et
des moyens pour transmettre des informations de fonctionnement au point d'accès principal désigné par chacun desdits points d'accès (101).

14. Système selon la revendication 13, dans lequel le système est mis en oeuvre dans chacun desdits points d'accès (101) sous la forme d'un logiciel, d'un micrologiciel ou de circuits.

15. Système selon la revendication 13, dans lequel le point d'accès principal désigné fonctionne comme un serveur pour attribuer une adresse réseau dans le réseau local.
